# EUROPEAN PATENT APPLICATION

(11) **EP 4 765 668 A1**
(43) Date of publication of application: **24.06.2026**
(21) Application number: 25220133.0
(22) Date of filing: 02.12.2025
(51) Int. Cl.: H04B 7/06

(54) **COMPUTER SYSTEM AND METHOD FOR PAYLOAD PROCESSING IN CELLULAR NETWORKS**

(30) Priority: 17.12.2024 US 202463735073 P
(71) Applicant: MacDonald, Dettwiler and Associates Corporation, Ste-Anne-de-Bellevue, QC H9X 3R2 (CA)
(72) Inventor: BROWN, Stephen, Sainte-Anne-de-Bellevue, H9X 3R2 (CA)
(74) Representative: Mewburn Ellis LLP

(57) **Abstract**

Systems and methods for payload processing in cellular networks are provided. A system for a transmit scenario includes a frequency domain partial beamforming network configured to convert input data into frequency domain capacity granules; a frequency-time converter configured to time-align the granules to a radio access network, and distribute the aligned granules to partial beamforming chains; the partial beamforming chains configured to beamform the aligned granules in frequency domain, convert the beamformed granules from frequency domain to time domain, and upconvert and convert to analog domain. A system for a receive scenario includes a frequency domain partial beamforming network configured to convert from analog domain, wherein the conversion includes down conversion; a frequency-time converter configured to convert from time domain to frequency domain, beamform the frequency domain granules, and sum the granules across partial beamformers; partial beamforming chains configured to convert the summed frequency domain granules to packet data.

## Description

### Technical Field

The following relates generally to the provision of telecommunications services, and more particularly to systems and methods for payload processing for 5G and similar systems.

### Introduction

Increasingly, data and cellular networks are evolving to utilize mobile network nodes, such as satellites. Satellite networks including, for example, low earth orbit (LEO) satellites, have been deployed and tested.

In such communication scenarios, there may be several different pieces of equipment on the ground and in space attempting to connect and communicate with each other.

However, in current architectures, an antenna is typically only connected to a single processing entity. An example of this is the use of a regenerative processor in a satellite, where the regenerative processor is the only piece of equipment in communication with the antenna or beamformer. This dedicated form of communication limits the ability of the antenna, as well as the device that it connects to.

Accordingly, there is a need for an improved system and method for payload processing in cellular networks that overcomes at least some of the disadvantages of existing systems and methods.

This background information is provided to reveal information believed by the applicant to be of possible relevance to the present disclosure. No admission is necessarily intended, nor should be construed, that any of the preceding information constitutes prior art against the present disclosure.

### Summary

A system for payload processing for a transmit scenario in cellular networks is provided. The system includes a frequency domain partial beamforming network configured to convert input data into frequency domain capacity granules; a frequency-time converter configured to time-align the granules to a radio access network, and distribute the aligned granules to partial beamforming chains; the partial beamforming chains configured to beamform the aligned granules in frequency domain, convert the beamformed granules from frequency domain to time domain, and upconvert and convert to analog domain.

In an embodiment, converting the beamformed granules from frequency domain to time domain includes at least one of: beamforming sub carrier symbols; performing an inverse fast Fourier transform; performing cyclic prefix addition and rate matching; and performing up-conversion.

In an embodiment, converting the beamformed granules from frequency domain to time domain includes at least one of: performing a carrier inverse fast Fourier transform; performing cyclic prefix addition and rate matching; performing frequency demultiplexing; beamforming subchannels; performing frequency multiplexing; and performing up-conversion.

In an embodiment, converting the beamformed granules from frequency domain to time domain includes at least one of: performing a subchannel inverse fast Fourier transform; performing cyclic prefix addition and rate matching; beamforming subchannels; performing frequency multiplexing; and performing up-conversion.

In an embodiment, the frequency domain partial beamforming network is coordinated by a sample synchronization and distribution fabric.

A method of payload processing for a transmit scenario in cellular networks is provided. The method includes converting input data into frequency domain capacity granules; time-aligning the granules to a radio access network; distributing the aligned granules to partial beamforming chains; beamforming the aligned granules in frequency domain; converting the beamformed granules from frequency domain to time domain; and upconverting and converting to analog domain.

In an embodiment, converting the beamformed granules from frequency domain to time domain includes at least one of: beamforming sub carrier symbols; performing an inverse fast Fourier transform; performing cyclic prefix addition and rate matching; and performing up-conversion.

In an embodiment, converting the beamformed granules from frequency domain to time domain includes at least one of: performing a carrier inverse fast Fourier transform; performing cyclic prefix addition and rate matching; performing frequency demultiplexing; beamforming subchannels; performing frequency multiplexing; and performing up-conversion.

In an embodiment, converting the beamformed granules from frequency domain to time domain includes at least one of: performing a subchannel inverse fast Fourier transform; performing cyclic prefix addition and rate matching; beamforming subchannels; performing frequency multiplexing; and performing up-conversion.

A system for payload processing for a receive scenario in cellular networks is provided. The system includes a frequency domain partial beamforming network configured to convert from analog domain, wherein the conversion includes down conversion; a frequency-time converter configured to convert from time domain to frequency domain, beamform the frequency domain granules, and sum the granules across partial beamformers; partial beamforming chains configured to convert the summed frequency domain granules to packet data.

In an embodiment, converting from time domain to frequency domain includes at least one of: performing down conversion; performing cyclic prefix removal and rate matching; performing a fast Fourier transform; and beamforming sub carrier symbols.

In an embodiment, converting from time domain to frequency domain includes at least one of: performing down conversion; performing frequency demultiplexing; beamforming subchannels; performing frequency multiplexing; performing cyclic prefix removal and rate matching; and performing a carrier fast Fourier transform.

In an embodiment, converting from time domain to frequency domain includes at least one of: performing down conversion; performing frequency demultiplexing; beamforming subchannels; performing cyclic prefix removal and rate matching; and performing a subchannel fast Fourier transform.

In an embodiment, the frequency domain partial beamforming network is coordinated by a sample synchronization and distribution fabric.

A method of payload processing for a receive scenario in cellular networks is provided. The method includes converting from analog domain, wherein the conversion includes down conversion; converting from time domain to frequency domain; beamforming the frequency domain granules; summing the granules across partial beamformers; and converting the summed frequency domain granules to packet data.

In an embodiment, converting from time domain to frequency domain includes at least one of: performing down conversion; performing cyclic prefix removal and rate matching; performing a fast Fourier transform; and beamforming sub carrier symbols.

In an embodiment, converting from time domain to frequency domain includes at least one of: performing down conversion; performing frequency demultiplexing; beamforming subchannels; performing frequency multiplexing; performing cyclic prefix removal and rate matching; and performing a carrier fast Fourier transform.

In an embodiment, converting from time domain to frequency domain includes at least one of: performing down conversion; performing frequency demultiplexing; beamforming subchannels; performing cyclic prefix removal and rate matching; and performing a subchannel fast Fourier transform.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a system for payload processing in cellular networks, according to an embodiment;
Figure 2 is a schematic diagram of the sample synchronization and distribution fabric of Figure 1, according to an embodiment;
Figure 3 is a flowchart of a method of payload processing for a transmit scenario in cellular networks, according to an embodiment;
Figure 4 is a flowchart of a method of payload processing for a receive scenario in cellular networks, according to an embodiment;
Figure 5 is a schematic diagram of an electronic device, according to an embodiment;
Figure 6 is an annotated diagram of methods of payload processing for transmit and receive scenarios in cellular networks, according to an embodiment;
Figure 7 is a pair of flowcharts of methods of frequency-to-time conversion using individual sub carrier beamforming, according to an embodiment;
Figure 8 is a pair of flowcharts of methods of frequency-to-time conversion using subchannel beamforming where the subchannels are formed by frequency demultiplex of a carrier, according to an embodiment; and
Figure 9 is a pair of flowcharts of methods of frequency-to-time conversion using subchannel beamforming where subchannels are formed by directly modulating with the subchannel, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

As used herein, the term "about" should be read as including variation from the nominal value, for example, a +/-10% variation from the nominal value. It is to be understood that such a variation is always included in a given value provided herein, whether or not it is specifically referred to.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present disclosure.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to the provision of telecommunications services, and more particularly to systems and methods for payload processing for 5G and similar systems.

Satellites are anticipated to increasingly be used in the provision of data and mobile network services. Therefore, a problem to be solved is how to synchronize communication abilities across different equipment.

The present disclosure relates to a payload processing architecture providing flexibly digital beamforming to multiple system endpoints. The endpoints may be located on the local satellite, on the ground or on another satellite. The traffic conveyed by these endpoints may be heterogenous in nature (for example, different waveforms). The digital beamforming provides a very high degree of flexibility in terms of bandwidth granularity and the number of beams.

Advantageously, technologies disclosed herein may be used in the provision of high flexibility (e.g., in the number of beams and bandwidth granularity) digital beamforming shared amongst multiple system sources/sinks with potentially heterogenous interfaces.

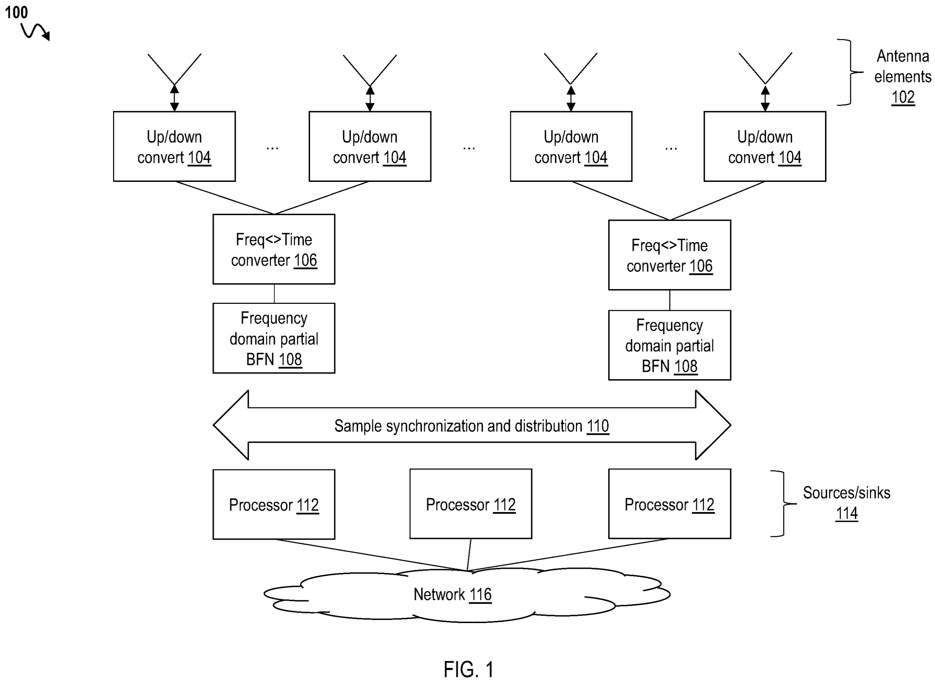

Referring now to Figure 1, shown therein is an example system 100 for a payload processing architecture, according to an embodiment.

The system 100 includes a set of antenna elements 102.

Each antenna element 102 may be connected to an uplink/downlink converter 104.

Pluralities of such uplink/downlink converters 104 are in communication with frequency-time converters 106.

In various embodiments, communication between uplink/downlink converters 104 and frequency-time converters 106 is digital communication.

In various embodiments, communication between uplink/downlink converters 104 and frequency-time converters 106 is analog communication.

In an embodiment, the frequency-time converters 106 are channelizers.

The system also includes a set of partial frequency domain beamformers 108 in communication with the frequency-time converters 106.

The partial frequency domain beamformers 108 provide a high degree of flexibility in the architecture and allow for the processing load to be spread across a number of modules.

The plurality of beamformers 108 also lends itself well to supporting redundancy and can be implemented on modern software-defined radio hardware.

While a mechanism for control of the beamformers 108 is not depicted, it is to be understood that it is coordinated with the operation of a sample synchronization and distribution fabric 110.

In an embodiment, the sample synchronization and distribution fabric 110 ensures that the inputs/outputs to this network are time aligned across all partial beamformers.

In an embodiment, the sample synchronization and distribution fabric 110 ensures that samples are extracted/inserted to the relevant frequency slots.

In an embodiment, the sample synchronization and distribution fabric 110 performs splitting/summing across the partial beamformers.

In various embodiments, a split/sum box may be used instead of the sample distribution fabric 110.

The synchronization and distribution fabric connects 110 to a set of one or more processors 112.

While only three processors 112 are depicted, it will be reasonably understood that there may be any number of processors 112.

Various examples of processor 112 types may be used in this architecture.

In an embodiment, the processors 112 include a channelizer that multiplexes to/from a transparent feeder link.

In an embodiment, the processors 112 include a sample (de)packetizer and compander that allows samples to be conveyed across the network.

In various embodiments, processors 112 use a level control.

In various embodiments, the level control is a shared resource in this example.

Each processor 112 provides a source/sink 114 for samples.

In an embodiment, the processors 112 may be entirely "internal" functions (e.g., on-board storage or multiplexing onto an RF link).

In an embodiment, the processors 112 may connect to a network 116 to provide inputs and outputs to the processor 112.

In various embodiments, the network 116 may connect to other satellites via intersatellite links and/or to the ground via, for example, a feeder network.

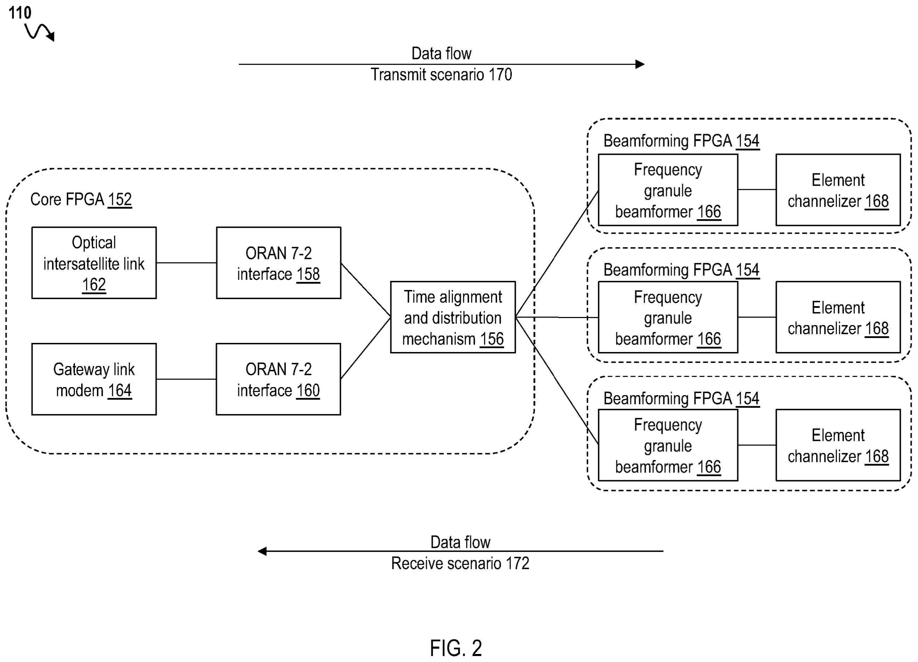

Referring now to Figure 2, shown therein is an example expanded view of the sample synchronization and distribution fabric 110 of Figure 1, according to an embodiment.

In the sample synchronization and distribution fabric 110, data flows from the left to the right for a transmit scenario 170.

Similarly, for a receive scenario 172, data flows from the right to the left.

In some embodiments, both the receive scenario 172 and the transmit scenario 170 are implemented using the same devices or components.

The sample synchronization and distribution fabric 110 includes a core fieldprogrammable gate array (FPGA) 152 and a plurality of beamforming FPGAs 154.

In an embodiment, the number of beamforming FPGAs 154 is three.

The core FPGA 152 includes a time alignment and distribution mechanism 156.

In an embodiment, a satellite interfaces to the ground (e.g., gateway link modem 164) via the ORAN 7-2 /7-3 interface 160.

This is essentially a packet format for symbols (transmit) and samples (receive). The ORAN interface 160 blocks translate between the standard ORAN interface 160 and frequency granules.

In an embodiment, the time alignment mechanism 156 is used to align the timing between different sources and sinks.

In an embodiment, a satellite interfaces to the ground using a transparent interface.

In an embodiment, an ORAN 7-2/7-3 interface 158 is used to interface with an optical intersatellite link (OISL) 162.

Unlike in terrestrial systems, systems disclosed herein may have radically different latencies (for example, the route via the OISL 162 will generally have a higher latency).

Once aligned, the frequency granules are distributed by the time alignment and distribution mechanism 156 to three parallel beamforming chains 154, which perform the beamforming.

In an embodiment, each beamforming FPGA 154 includes a frequency granule beamformer 166.

In an embodiment, each beamforming FPGA 154 includes an element channelizer 168.

In receive scenario 172, the mapping from beamformer chains 154 is carried out via summation of partial beams.

Another application of the present disclosure may be realized in a pure regenerative system for 5G New Radio (5G-NR) with a homogenous subcarrier spacing.

In various embodiments, the frequency-time conversion includes an (inverse) fast Fourier transform with cyclic prefix addition/removal.

In various embodiments, the frequency-time conversion further includes filtering of the modulated OFDM waveform.

In such embodiments, the beamformer may operate on subcarriers.

In an embodiment, the processors may include ORAN Fronthaul interfaces to high PHY and upper stack components on the ground or on another satellite conveyed by intersatellite link connection(s) and/or a feeder link, as required.

In an embodiment, the processors may include local high PHY performing on-board regeneration and upper stack components on the ground or on another satellite conveyed by intersatellite link connection(s) and/or a feeder link, as required.

Further systems and applications might include processors for different use cases (e.g., a combination of regenerative 5G processing and arbitrary transparent waveforms).

In various embodiments, while the detailed signal processing of the frequency-time conversion may need to change to accommodate the envelope of use cases, the principle of its operation and that of the beamformer would remain the same.

Advantageously, the techniques disclosed herein allow multiplexing different equipment to the same antenna. As a result, there is less of a need for expensive equipment such as channelizers, thus cost savings may be realized.

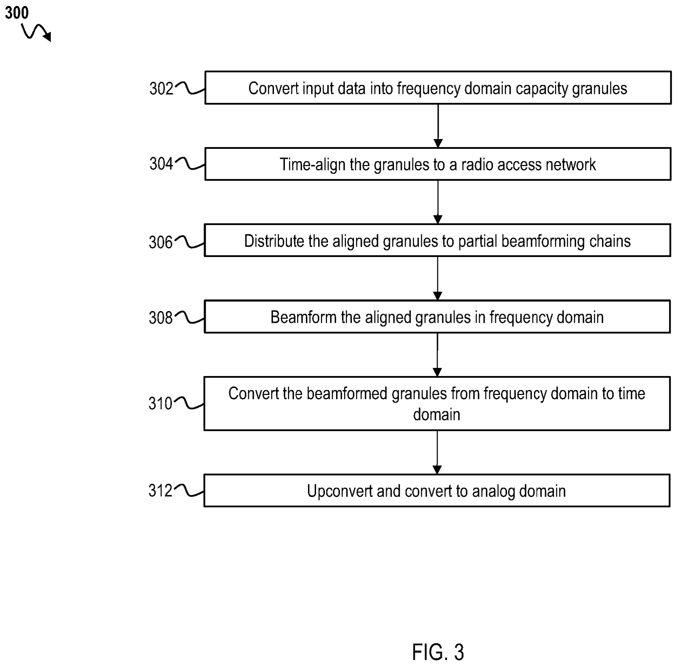

Referring now to Figure 3, shown therein is a method 300 of payload processing for a transmit scenario in cellular networks, according to an embodiment.

The method 300 may be encoded as computer-executable instructions and executed by one or more computing devices comprising one or more processors. In an embodiment, the method 300 may be executed by the various components of Figure 1 and Figure 2.

At 302, the method 300 includes converting input data into frequency domain capacity granules.

At 304, the method 300 further includes time-aligning the granules to a radio access network.

At 306, the method 300 further includes distributing the aligned granules to partial beamforming chains.

At 308, the method 300 further includes beamforming the aligned granules in frequency domain.

At 310, the method 300 further includes converting the beamformed granules from frequency domain to time domain.

At 312, the method 300 further includes upconverting and converting to analog domain.

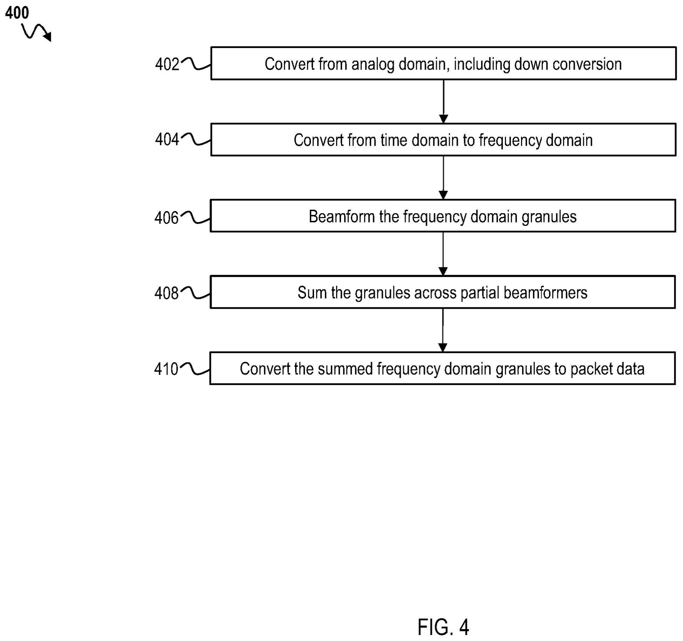

Referring now to Figure 4, shown therein is a method 400 of payload processing for a receive scenario in cellular networks, according to an embodiment.

The method 400 may be encoded as computer-executable instructions and executed by one or more computing devices comprising one or more processors. In an embodiment, the method 400 may be executed by the various components of Figure 1 and Figure 2.

At 402, the method 400 includes converting from analog domain, wherein the conversion includes down conversion.

At 404, the method 400 further includes converting from time domain to frequency domain.

At 406, the method 400 further includes beamforming the frequency domain granules.

At 408, the method 400 further includes summing the granules across partial beamformers.

At 410, the method 400 further includes converting the summed frequency domain granules to packet data.

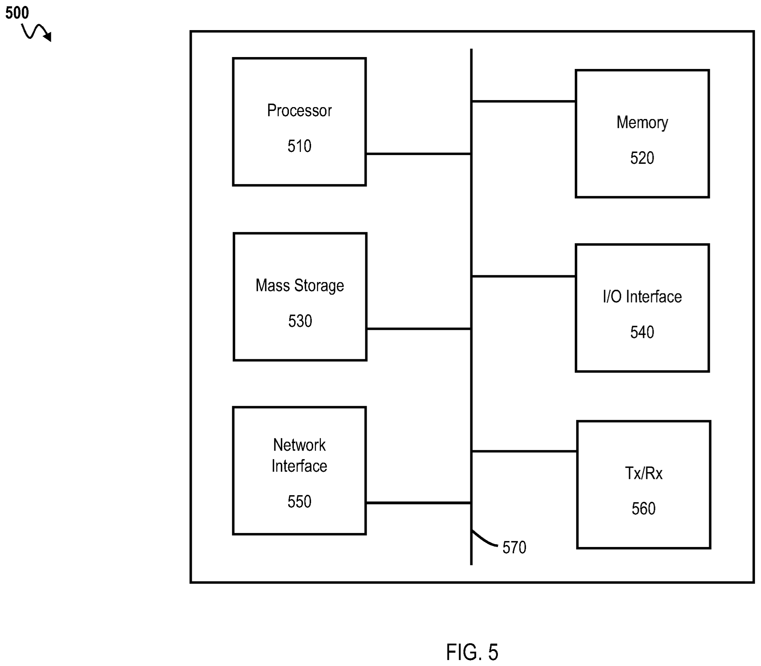

Referring now to Figure 5, shown therein is a schematic diagram of an electronic device 500 that may perform any or all of operations of the above methods and features explicitly or implicitly described herein, according to different embodiments of the present disclosure. For example, a computer equipped with network function may be configured as electronic device 500.

As shown, the device includes a processor 510, such as a Central Processing Unit (CPU) or specialized processors such as a Graphics Processing Unit (GPU) or other such processor unit (including for example FPGAs and ASICs), memory 520, non-transitory mass storage 530, I/O interface 540, network interface 550, and a transceiver 560, all of which are communicatively coupled via bi-directional bus 570. According to certain embodiments, any or all of the depicted elements may be utilized, or only a subset of the elements. Further, the device 500 may contain multiple instances of certain elements, such as multiple processors, memories, or transceivers. Also, elements of the hardware device may be directly coupled to other elements without the bi-directional bus. Additionally or alternatively to a processor and memory, other electronics, such as integrated circuits, may be employed for performing the required logical operations.

The memory 520 may include any type of non-transitory memory such as static random access memory (SRAM), dynamic random access memory (DRAM), synchronous DRAM (SDRAM), read-only memory (ROM), any combination of such, or the like. The mass storage element 530 may include any type of non-transitory storage device, such as a solid state drive, hard disk drive, a magnetic disk drive, an optical disk drive, USB drive, or any computer program product configured to store data and machine executable program code. According to certain embodiments, the memory 520 or mass storage 530 may have recorded thereon statements and instructions executable by the processor 510 for performing any of the aforementioned method operations described above.

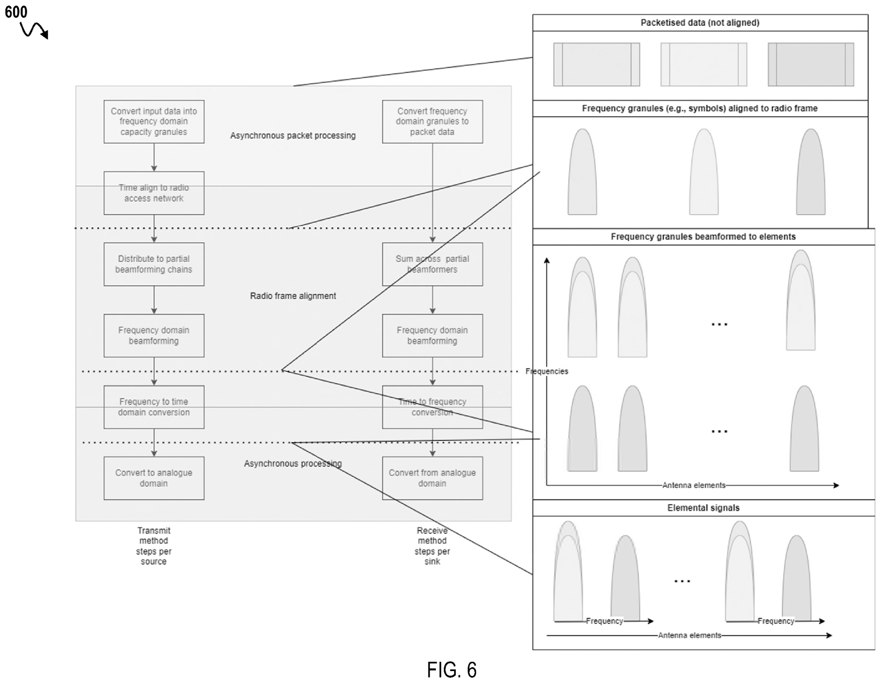

Referring now to Figure 6, shown therein is an annotated diagram 600 of the sequence of method steps for transmit and receive scenarios, according to an embodiment.

The method steps are annotated with corresponding pictures describing how data goes packetized data to the phased array antenna elements.

In various embodiments, the frequency domain granules may be individual symbols of the OFDM waveform. (i.e., one subcarrier), or subchannels comprising multiple OFDM sub carriers.

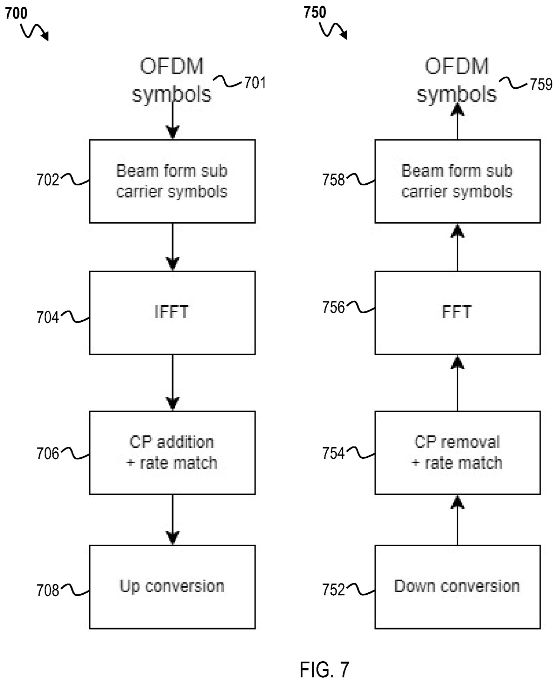

Referring now to Figure 7, shown therein are methods 700 and 750 of frequency-to-time conversion using individual sub carrier beamforming, according to an embodiment.

The method 700 (for a transmit scenario) may be encoded as computer-executable instructions and executed by one or more computing devices comprising one or more processors.

In method 700, orthogonal frequency-division multiplexing (OFDM) symbols 701 are provided.

At 702, the method 700 includes beamforming sub carrier symbols.

At 704, the method 700 further includes performing an inverse fast Fourier transform.

At 706, the method 700 further includes cyclic prefix (CP) addition and rate matching.

At 708, the method 700 further includes up-conversion.

The method 750 (for a receive scenario) may be encoded as computer-executable instructions and executed by one or more computing devices comprising one or more processors.

At 752, the method 750 includes down conversion.

At 754, the method 750 further includes cyclic prefix (CP) removal and rate matching.

At 756, the method 750 further includes performing a fast Fourier transform.

At 758, the method 750 further includes beamforming sub carrier symbols.

OFDM symbols 759 are then acquired.

Individual sub carrier beamforming is a highly efficient method if the processing entails only an OFDM signal of a fixed numerology (sub carrier spacing).

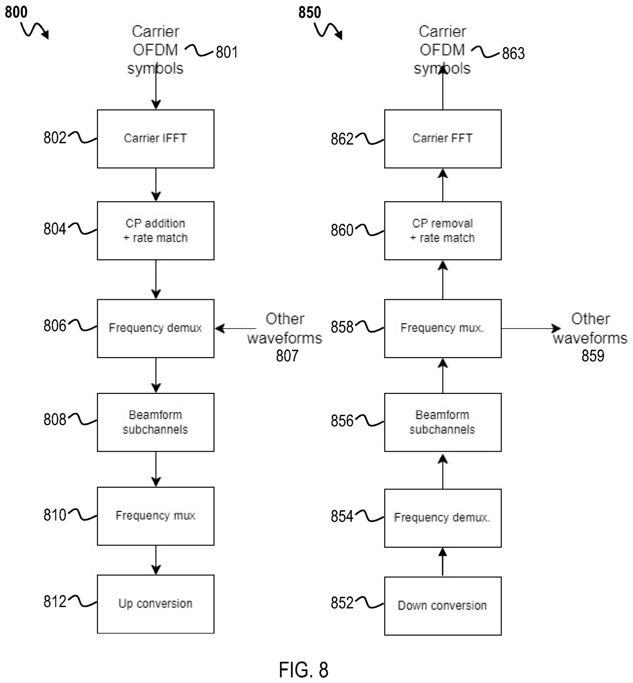

Referring now to Figure 8, shown therein are methods 800 and 850 of frequency-to-time conversion using subchannel beamforming where the subchannels are formed by frequency demultiplex of a carrier, according to an embodiment.

Methods 800 and 850 describe processing variegated traffic, including non-OFDM signals.

The method 800 (for a transmit scenario) may be encoded as computer-executable instructions and executed by one or more computing devices comprising one or more processors.

In method 800, carrier orthogonal frequency-division multiplexing (OFDM) symbols 801 are provided.

At 802, the method 800 includes performing a carrier inverse fast Fourier transform (IFFT).

At 804, the method 800 further includes cyclic prefix (CP) addition and rate matching.

At 806, the method 800 further includes frequency demultiplexing.

At this stage, other waveforms 807 may also be applied to the data.

At 808, the method 800 further includes beamforming subchannels.

At 810, the method 800 further includes frequency multiplexing.

At 812, the method 900 further includes up-conversion.

The method 850 (for a receive scenario) may be encoded as computer-executable instructions and executed by one or more computing devices comprising one or more processors.

At 852, the method 850 includes down conversion.

At 854, the method 850 further includes frequency demultiplexing.

At 856, the method 850 further includes beamforming subchannels.

At 858, the method 950 further includes frequency multiplexing.

At this stage, other waveforms 859 may also be acquired from the data.

At 860, the method 850 further includes cyclic prefix (CP) removal and rate matching.

At 862, the method 850 further includes performing a carrier fast Fourier transform (FFT).

Subchannel OFDM symbols 863 are then acquired.

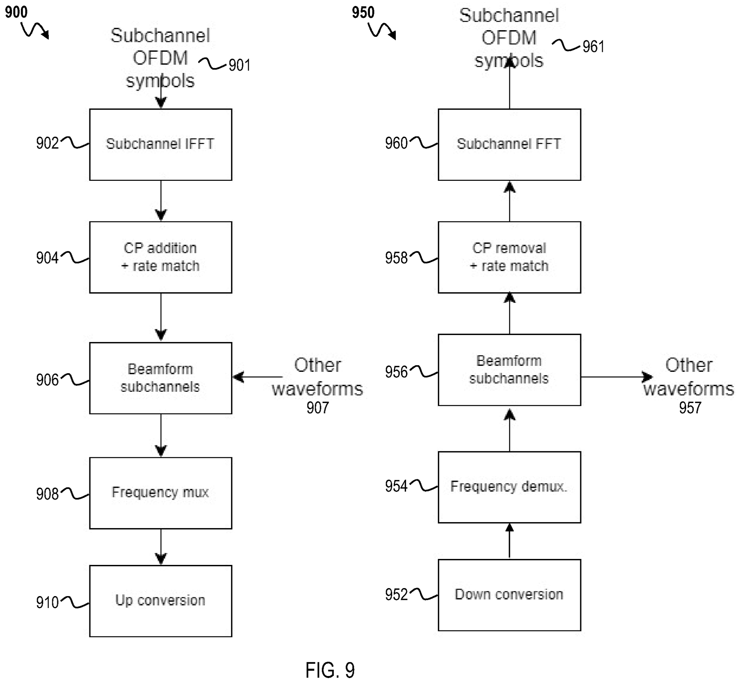

Referring now to Figure 9, shown therein are methods 900 and 950 of frequency-to-time conversion using subchannel beamforming where subchannels are formed by directly modulating with the subchannel, according to an embodiment.

Methods 900 and 950 describe optimized versions of methods 800 and 850, providing reduced complexity, unless the frequency granules are quite fine.

The method 900 (for a transmit scenario) may be encoded as computer-executable instructions and executed by one or more computing devices comprising one or more processors.

In method 900, subchannel orthogonal frequency-division multiplexing (OFDM) symbols 901 are provided.

At 902, the method 900 includes performing a subchannel inverse fast Fourier transform (IFFT).

At 904, the method 900 further includes cyclic prefix (CP) addition and rate matching.

At 906, the method 900 further includes beamforming subchannels.

At this stage, other waveforms 907 may also be applied to the data.

At 908, the method 900 further includes frequency multiplexing.

At 910, the method 900 further includes up-conversion.

The method 950 (for a receive scenario) may be encoded as computer-executable instructions and executed by one or more computing devices comprising one or more processors.

At 952, the method 950 includes down conversion.

At 954, the method 950 further includes frequency demultiplexing.

At 956, the method 950 further includes beamforming subchannels.

At this stage, other waveforms 957 may also be acquired from the data.

At 958, the method 950 further includes cyclic prefix (CP) removal and rate matching.

At 960, the method 950 further includes performing a subchannel fast Fourier transform (FFT).

Subchannel OFDM symbols 961 are then acquired.

While the above description provides examples of one or more apparatus, methods, or systems, it will be appreciated that other apparatus, methods, or systems may be within the scope of the claims as interpreted by one of skill in the art.

Elements of each embodiment may be incorporated into other embodiments, for example, configurations discussed in relation to one embodiment, may be applied to other embodiments disclosed herein.

Further, it is evident that various modifications and combinations can be made without departing from the invention. The specification and drawings are, accordingly, to be regarded simply as an illustration of the invention as defined by the claims, and are contemplated to cover any and all modifications, variations, combinations or equivalents that fall within the scope of the present disclosure.

## Claims

1. A computer system for payload processing for a transmit scenario in cellular networks, the system comprising:
a frequency domain partial beamforming network configured to convert input data into frequency domain capacity granules;
a frequency-time converter configured to:
time-align the granules to a radio access network;
distribute the aligned granules to partial beamforming chains;
the partial beamforming chains configured to:
beamform the aligned granules in frequency domain;
convert the beamformed granules from frequency domain to time domain;
upconvert and convert to analog domain.

2. The system of claim 1, wherein converting the beamformed granules from frequency domain to time domain includes at least one of: beamforming sub carrier symbols; performing an inverse fast Fourier transform; performing cyclic prefix addition and rate matching; and performing up-conversion.

3. The system of claim 1, wherein converting the beamformed granules from frequency domain to time domain includes at least one of: performing a carrier inverse fast Fourier transform; performing cyclic prefix addition and rate matching; performing frequency demultiplexing; beamforming subchannels; performing frequency multiplexing; and performing up-conversion.

4. The system of claim 1, wherein converting the beamformed granules from frequency domain to time domain includes at least one of: performing a subchannel inverse fast Fourier transform; performing cyclic prefix addition and rate matching; beamforming subchannels; performing frequency multiplexing; and performing up-conversion.

5. The system of claim 1, wherein the frequency domain partial beamforming network is coordinated by a sample synchronization and distribution fabric.

6. A method of payload processing for a transmit scenario in cellular networks, the method comprising:
converting input data into frequency domain capacity granules;
time-aligning the granules to a radio access network;
distributing the aligned granules to partial beamforming chains;
beamforming the aligned granules in frequency domain;
converting the beamformed granules from frequency domain to time domain; and
upconverting and converting to analog domain.

7. The method of claim 6, wherein converting the beamformed granules from frequency domain to time domain includes at least one of: beamforming sub carrier symbols; performing an inverse fast Fourier transform; performing cyclic prefix addition and rate matching; and performing up-conversion.

8. The method of claim 6, wherein converting the beamformed granules from frequency domain to time domain includes at least one of: performing a carrier inverse fast Fourier transform; performing cyclic prefix addition and rate matching; performing frequency demultiplexing; beamforming subchannels; performing frequency multiplexing; and performing up-conversion.

9. The method of claim 6, wherein converting the beamformed granules from frequency domain to time domain includes at least one of: performing a subchannel inverse fast Fourier transform; performing cyclic prefix addition and rate matching; beamforming subchannels; performing frequency multiplexing; and performing up-conversion.

10. A computer system for payload processing for a receive scenario in cellular networks, the system comprising:
a frequency domain partial beamforming network configured to:
convert from analog domain, wherein the conversion includes down conversion;
a frequency-time converter configured to:
convert from time domain to frequency domain;
beamform the frequency domain granules;
sum the granules across partial beamformers;
partial beamforming chains configured to:
convert the summed frequency domain granules to packet data.

11. The system of claim 10, wherein converting from time domain to frequency domain includes at least one of: performing down conversion; performing cyclic prefix removal and rate matching; performing a fast Fourier transform; and beamforming sub carrier symbols.

12. The system of claim 10, wherein converting from time domain to frequency domain includes at least one of: performing down conversion; performing frequency demultiplexing; beamforming subchannels; performing frequency multiplexing; performing cyclic prefix removal and rate matching; and performing a carrier fast Fourier transform.

13. The system of claim 10, wherein converting from time domain to frequency domain includes at least one of: performing down conversion; performing frequency demultiplexing; beamforming subchannels; performing cyclic prefix removal and rate matching; and performing a subchannel fast Fourier transform.

14. The system of claim 10, wherein the frequency domain partial beamforming network is coordinated by a sample synchronization and distribution fabric.
